# EUROPÄISCHE PATENTSCHRIFT

(11) **EP 3 434 850 B1**
(45) Veröffentlichungstag und Bekanntmachung des Hinweises auf die Patenterteilung: **24.06.2020**
(21) Anmeldenummer: 18185146.0
(22) Anmeldetag: 24.07.2018
(51) Int. Cl.: E05B 47/00, E05B 63/00, E05B 71/00, B62H 5/14

(54) **ELEKTRONISCHES ZWEIRADSCHLOSS**
ELECTRONIC LOCK FOR A TWO WHEELER
SERRURE ÉLECTRONIQUE POUR DEUX ROUES

(30) Priorität: 26.07.2017 DE 102017116941
(43) Veröffentlichungstag der Anmeldung: 30.01.2019
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 1 760 232
- WO-A1-2017/097099
- CN-A- 106 892 027
- DE-A1-102015 013 228
- US-A- 5 291 761
- US-A1- 2009 282 876
- US-B1- 6 761 051

## Beschreibung

Die vorliegende Erfindung betrifft ein elektronisches Zweiradschloss mit einem Riegelelement, das zwischen einer Offenstellung und einer Geschlossenstellung beweglich ist, einem Sperrmechanismus, der das Riegelelement in einem Verriegelungszustand gegen ein Verlassen der Geschlossenstellung sperrt und in einem Entriegelungszustand für ein Verlassen der Geschlossenstellung freigibt, einer elektrischen Antriebseinheit, die dazu ausgebildet ist, den Sperrmechanismus in den Entriegelungszustand zu versetzen, und einer Steuereinheit, die dazu ausgebildet ist, die Antriebseinheit anzusteuern. In der Geschlossenstellung des Riegelelements sichert das Riegelelement ein zugeordnetes Zweirad, an dem das Zweiradschloss angeordnet ist, gegen eine unbefugte Nutzung.

Ein derartiges elektronisches Zweiradschloss kann beispielsweise als ein Rahmenschloss eines Fahrrades ausgebildet sein. Bei einem solchen Rahmenschloss greift das Riegelelement in der Geschlossenstellung typischerweise zwischen die Speichen des Hinterrades und blockiert es auf diese Weise gegen ein Drehen. Bei einfachen Rahmenschlössern wird das Riegelelement, das beispielsweise ein drehbarer Rundbügel, ein Schwenkbügel oder ein linear beweglicher Bügel sein kann, von Hand in die Geschlossenstellung versetzt, in der es vorteilhafterweise automatisch einrastend von dem Sperrmechanismus verriegelt wird. Auf diese Weise wird das Riegelelement in der Geschlossenstellung gehalten und kann die Geschlossenstellung erst wieder verlassen, wenn es zuvor wieder entriegelt wurde. Zweckmäßigerweise ist dann Voraussetzung für ein Entriegeln des Riegelelements eine Betätigung des verriegelnden Sperrmechanismus mittels eines dem Schloss zugeordneten Schlüssels. Sobald das Riegelelement, z.B. durch Drehen des Schlüssels in dem Schloss, entriegelt ist, kann es wieder in seine das jeweilige Rad freigebende Offenstellung bewegt werden. Das erfolgt vorteilhafterweise direkt im Anschluss an das Entriegeln automatisch, etwa indem das Riegelelement in die Offenstellung vorgespannt ist.

Bei manchen derartigen Rahmenschlössern verbleibt der Schlüssel, solange das Schloss geöffnet ist, in dem Schloss eingesteckt und kann nur bei geschlossenem Schloss abgezogen werden. Daher kann der Schlüssel nicht an einem Schlüsselbund befestigt sein, da dieser sonst bei der Fahrt zwischen die Speichen geraten könnte. Bei anderen Rahmenschlössern lässt sich der Schlüssel zwar auch bei geöffnetem Schloss abziehen. Doch auch bei einem solchen Rahmenschloss stellt es eine Verbesserung des Komforts dar, wenn vermieden werden kann, dass ein Schlüssel unmittelbar am Rahmenschloss betätigt werden muss, da das Rahmenschloss typischerweise im Bereich der Speichen und des Rades angeordnet ist, die in der Regel verschmutzt sind, und dort nicht unbedingt gut zugänglich ist.

Eine Verbesserung des Komforts kann beispielsweise durch elektronische Zweiradschlösser erreicht werden, die eine elektrische (z.B. elektromechanische oder elektromagnetische) Antriebseinheit aufweisen, die sich dazu ansteuern lässt, das Riegelelement zu entriegeln, so dass es anschließend in die Offenstellung bewegt werden kann. Da somit zumindest für das Entriegeln eine manuelle Betätigung entfallen kann, wird die Benutzung des Zweiradschlosses erleichtert, insbesondere dann, wenn das Riegelelement anschließend noch, etwa infolge einer Vorspannung, automatisch in die Offenstellung bewegt wird. Wenn bei einem solchen Schloss das Bewegen des Riegelelements in die Geschlossenstellung durch manuelle Betätigung erfolgt und der Sperrmechanismus das Riegelelement sodann automatisch sperrt, spricht man von einem halbautomatischen Zweiradschloss.

Das Vorsehen eines elektronischen Zweiradschlosses kann speziell bei sogenannten E-Bikes oder Pedelecs nützlich sein, die einen elektrischen (Hilfs-)Antrieb aufweisen, so dass bei derartigen Zweirädern ohnehin eine Energieversorgung vorgesehen ist, die dann auch für das Zweiradschloss genutzt werden kann. Zudem können derartige Zweiräder zentrale Bedienmittel aufweisen, wie etwa ein Display mit Eingabemöglichkeit, die für eine gute Zugänglichkeit z.B. an der Lenkstange des Zweirades angeordnet sein können. Solche Bedienmittel können dann auch für eine Berechtigungsüberprüfung, z.B. anhand eines Schlüssels, eines Zahlen- oder sonstigen Codes oder eines Fingerabdrucks, als Voraussetzung für ein Entriegeln des Zweiradschlosses nutzbar sein. Insbesondere kann somit eine Betätigung des Zweiradschlosses komfortabel über ein solches Bedienmittel erfolgen. Derartige Bedienmittel können natürlich nicht nur bei elektrisch angetriebenen Zweirädern vorgesehen werden. Außerdem brauchen die Bedienmittel nicht unbedingt stationär an dem Zweirad angeordnet zu sein. Vorteilhafterweise sind sie zumindest von dem Zweirad lösbar oder sogar unabhängig, beispielsweise wenn die Bedienmittel über Funk mit einer Zentraleinheit des Zweirades oder direkt mit dem Zweiradschloss in Verbindung stehen, um letztlich über die Steuereinheit die Antriebseinheit des Zweiradschlosses für ein Entriegeln anzusteuern. Derartige Bedienmittel können auch lediglich als eine Software-Applikation, z.B. auf einem Smartphone, ausgeführt werden, so dass das jeweilige Anwendergerät, mit welchem die Bedienmittel verwirklicht werden, nicht unbedingt Teil des jeweiligen Zweiradsystems oder des Zweiradschlosssystems sein muss.

Dass das elektronische Zweiradschloss komfortabel aus der "Ferne" (also z.B. von einem Anwendergerät an der Lenkstange des jeweiligen Zweirades aus oder von einem vom Fahrer mitgeführten Anwendergerät aus) zu einem Entriegeln angesteuert werden kann und die Entriegelung dann angetrieben erfolgt, kann das Zweiradschloss aber auch anfälliger für Angriffe machen. Denn für eine Ansteuerung von außen müssen an dem Zweiradschloss Kommunikationsmittel vorgesehen werden, die unter Umständen dazu genutzt werden können, das Zweiradschloss in unautorisierter Weise zu einem Entriegeln anzusteuern, etwa indem nachgestellte Entriegelungsbefehle an das Zweiradschloss gesandt werden. Zwar kann für eine solche externe Kommunikation eine Verschlüsselung vorgesehen sein, um derartige Angriffe zu erschweren. Wenn es einem Angreifer aber gelingt, die Steuereinheit oder die Antriebseinheit des Zweiradschlosses direkt zu kontaktieren, könnte eine verschlüsselte externe Kommunikation auf diese Weise umgangen werden. Wenn die Antriebseinheit etwa einen Elektromotor umfasst, insbesondere zumindest im Wesentlichen als Elektromotor ausgebildet ist, könnte es für ein unautorisiertes Entriegeln des Sperrmechanismus, der das Riegelelement in der Geschlossenstellung hält, beispielsweise ausreichen, den Elektromotor direkt zu kontaktieren und zu bestromen, so dass er den Sperrmechanismus entriegelt. Ein solcher direkter Eingriff in das Zweiradschloss kann zwar grundsätzlich mechanisch durch ein Schlossgehäuse zumindest erschwert werden. Durch ein beispielsweise aus hartem Metall gebildetes Schlossgehäuse würde aber aufgrund seiner abschirmenden Wirkung eine funkbasierte Kommunikation mit externen Geräten verhindert oder zumindest beeinträchtigt.

Eine weitere Schwierigkeit ergibt sich hinsichtlich der Möglichkeiten, das Zweiradschloss in Verbindung mit verschiedenen Anwendergeräten und/oder verschiedenen Fahrzeugsystemen jeweiliger Zweiräder zu nutzen, da diese ganz unterschiedliche Kommunikationsarten voraussetzen können. Grundsätzlich kann ein elektronisches Zweiradschloss für mehrere verschiedene Kommunikationsarten, z.B. verschiedene Kommunikationsprotokolle, entsprechende Kommunikationsmittel aufweisen. Dadurch erhöhen sich aber die Kosten des Zweiradschlosses, da mehrere Kommunikationsmittel vorgesehen werden, von denen dann abhängig von dem jeweiligen Zweirad und/oder Anwendergerät lediglich eines genutzt wird.

Ein Zweiradschloss mit den Merkmalen des Oberbegriffs des Anspruchs 1 ist aus US 5,291,761 A bekannt.

Es ist eine Aufgabe der Erfindung, ein elektronisches Zweiradschloss bereitzustellen, das effizient gefertigt und variabel eingesetzt werden kann, eine komfortable Sicherung des jeweiligen Zweirades ermöglicht und dabei besonders sicher gegen ein unautorisiertes Öffnen des Schlosses ausgebildet ist.

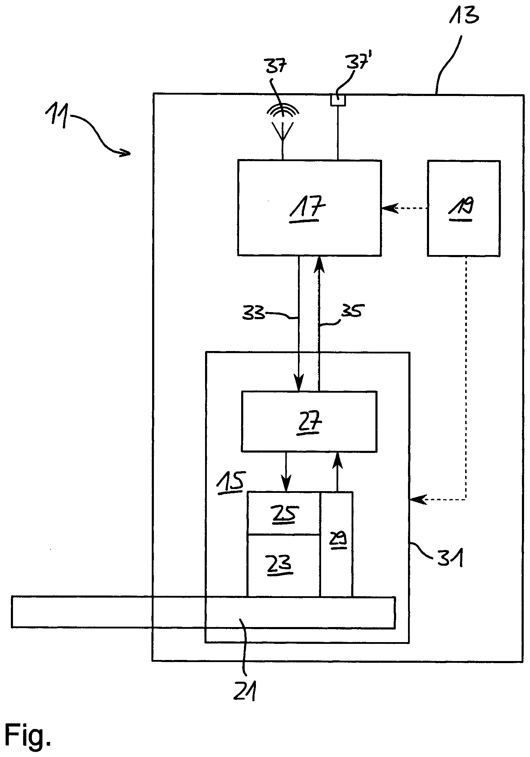

Die Aufgabe wird gelöst durch ein elektronisches Zweiradschloss mit den Merkmalen des Anspruchs 1 sowie durch ein modulares System zur Ausbildung eines elektronischen Zweiradschlosses mit den Merkmalen des Anspruchs 12. Vorteilhafte Weiterbildungen der Erfindung ergeben sich aus den jeweiligen Unteransprüchen, der vorliegenden Beschreibung sowie der Figur.

Erfindungsgemäß ist das Zweiradschloss modular aufgebaut und umfasst zumindest ein Antriebsmodul und eine Kommunikationseinheit. Insbesondere kann die Kommunikationseinheit als ein Kommunikationsmodul ausgebildet sein und somit neben dem Antriebsmodul als ein weiteres Modul des Zweiradschlosses eine räumlich einheitliche, insbesondere abgeschlossene und grundsätzlich austauschbare funktionale Einheit bilden. Eine solche modulare Ausbildung ermöglicht es allgemein, für verschiedene Teilaufgaben des Schlosses (wie z.B. ein motorisches Entriegeln oder die Kommunikation mit einem externen Gerät) jeweils gesonderte Module vorzusehen. Insbesondere können für eine jeweilige Teilaufgabe grundsätzlich mehrere verschiedene Module zur Verfügung stehen, welche die jeweilige Teilaufgabe auf unterschiedliche Weise umsetzen (z.B. auf verschiedene Arten zur Kommunikation mit einem externen Gerät ausgebildet sind) und aus denen dann bei der Fertigung oder auch bei einer Umrüstung des Schlosses je nach spezifischem Bedarf ein jeweiliges Modul ausgewählt werden kann. So können auf konstruktiv einfache Weise verschiedene Varianten des Zweiradschlosses realisiert werden.

Das Antriebsmodul umfasst ein Modulgehäuse, in welchem zumindest der Sperrmechanismus, die Antriebseinheit und die Steuereinheit derart aufgenommen sind, dass diese vor mechanischen Einwirkungen von außen geschützt sind. Dazu kann das Modulgehäuse beispielsweise ein besonders hartes Material, zum Beispiel ein hartes oder gehärtetes Metall, z.B. Stahl, umfassen und/oder eine Struktur aufweisen, die ihm eine besondere Festigkeit verleiht. Der Sperrmechanismus, die Antriebseinheit und die Steuereinheit müssen dabei nicht zwingend vollständig von dem Modulgehäuse umgeben sein. Beispielsweise könnte eine Abtriebswelle der Antriebseinheit aus dem Modulgehäuse ragen. Vorzugsweise sind der Sperrmechanismus, die Antriebseinheit und die Steuereinheit aber jeweils vollständig in dem Modulgehäuse aufgenommen und auf diese Weise besonders zuverlässig vor einer Einwirkung von außen, z.B. mechanischer Manipulation oder elektrischer Kontaktierung, geschützt. Ferner braucht das Modulgehäuse nicht vollumfänglich geschlossen ausgebildet zu sein. Insbesondere für das Zusammenwirken der Antriebseinheit mit dem Riegelelement kann das Modulgehäuse auch Öffnungen aufweisen, die aber vorteilhafterweise vergleichsweise klein, z.B. im Vergleich zur Außenfläche des Modulgehäuses auf einen Anteil von unter 20%, vorzugsweise unter 10%, beschränkt, sind und insbesondere derart angeordnet sind, dass sie zumindest keinen Zugriff auf den Sperrmechanismus erlauben. Insbesondere kann das Zweiradschloss derart ausgebildet sein, dass alle Öffnungen im Modulgehäuse zumindest in der Geschlossenstellung des Riegelelements oder jedenfalls in dem Verriegelungszustand des Sperrmechanismus im Wesentlichen versperrt sind, z.B. durch das Riegelelement selbst.

Das Modulgehäuse grenzt das Antriebsmodul gegenüber der Kommunikationseinheit sowie gegebenenfalls weiteren Modulen des Zweiradschlosses ab. Bei dem Modulgehäuse handelt es sich also nicht einfach um das Gehäuse des Zweiradschosses, in welchem im Wesentlichen alle Komponenten des Zweiradschlosses aufgenommen sind. Sondern das Modulgehäuse ist das Gehäuse lediglich des Antriebsmoduls. Insbesondere ist zumindest die Kommunikationseinheit außerhalb des Modulgehäuses vorgesehen. Sofern das Zweiradschloss neben dem Antriebsmodul weitere Module aufweist, sind auch deren Komponenten nicht in dem Modulgehäuse des Antriebsmoduls aufgenommen. Allerdings können die Kommunikationseinheit und/oder gegebenenfalls weitere Module jeweils eigene Modulgehäuse aufweisen, durch die sie gegenüber dem Antriebsmodul und auch untereinander abgegrenzt sind.

Dadurch, dass für das Antriebsmodul ein eigenes Modulgehäuse vorgesehen wird, kann das Antriebsmodul, welches den Sperrmechanismus sowie die Mittel zum Lösen des Sperrmechanismus beherbergt und daher besonders wichtig für die Zuverlässigkeit des Zweiradschlosses ist, besonders sicher vor Eingriffen von außen geschützt werden. Denn durch das Modulgehäuse sind die Komponenten des Antriebsmoduls innerhalb des Zweiradschlosses gesondert eingekapselt, so dass speziell für diese Komponenten die allgemeine Manipulationssicherheit des Zweiradschlosses noch zusätzlich erhöht ist.

Neben dem Antriebsmodul weist das Zweiradschloss zumindest die genannte Kommunikationseinheit auf, über die es mit bezüglich des Zweiradschlosses externen Geräten in Verbindung stehen kann. Intern steht die Kommunikationseinheit zumindest mit dem Antriebsmodul in Verbindung, so dass es möglich ist, das Antriebsmodul über die Kommunikationseinheit von außen anzusprechen.

Erfindungsgemäß ist die Steuereinheit des Antriebsmoduls dazu ausgebildet, von der Kommunikationseinheit Steuersignale in verschlüsselter Form zu empfangen und die Antriebseinheit in Reaktion auf die Steuersignale anzusteuern. Mit anderen Worten erfolgt die interne Kommunikation zwischen der Kommunikationseinheit und dem Antriebsmodul verschlüsselt. Dass ein Signal in verschlüsselter Form vorliegt, meint dabei nicht einfach, dass das Signal die jeweilige zu übertragende Information gemäß einem bestimmten Signalprotokoll repräsentiert. Vielmehr ist unter Verschlüsselung zu verstehen, dass das jeweilige Signal in eine Form gebracht wird, in der ein Rückschluss auf die dem Signal zugrundliegende Information im Wesentlichen nur bei Kenntnis eines Schließgeheimnisses (kryptographischer Schlüssel) möglich ist. Ohne das Schließgeheimnis lässt sich das Signal dagegen allenfalls mit erheblichem, insbesondere zeitlichem, Aufwand entschlüsseln, der ein Überwinden der Verschlüsselung praktisch unmöglich macht.

Eine solche Ausbildung des elektronischen Zweiradschlosses sorgt in Ergänzung zu der beschriebenen mechanischen Verbesserung der Manipulationssicherheit infolge der Einkapselung des Antriebsmoduls in einem eigenen Modulgehäuse für eine zusätzliche Verbesserung der Sicherheit auch in signaltechnischer Hinsicht. Zwar ist es zweckmäßig, bereits die externe Kommunikation zwischen externen Bedienmitteln, wie z.B. einem Anwendergerät, und der Kommunikationseinheit zu verschlüsseln. Wenn aber nur die externe Kommunikation verschlüsselt ist, innerhalb des Zweiradschlosses jedoch Signale unverschlüsselt von der Kommunikationseinheit zu dem Antriebsmodul übertragen werden, stellt diese interne Kommunikationsstrecke eine Schwachstelle in der Sicherheit des Zweiradschlosses dar. Denn wenn es einem Angreifer gelingt, Zugang zu der internen Kommunikationsstrecke zu erhalten, könnte er die Steuereinheit direkt ansprechen und darüber dann die Antriebseinheit zu einem Entriegeln des Schlosses ansteuern. Durch die verschlüsselte interne Kommunikation zwischen der Kommunikationseinheit des Zweiradschlosses und der Steuereinheit des Antriebsmoduls wird ein solches signaltechnisches Eindringen in das Antriebsmodul dagegen verhindert. Insbesondere werden die genannten Steuersignale erst innerhalb des Antriebsmoduls entschlüsselt und direkt für eine entsprechende Ansteuerung der Antriebseinheit genutzt. Auf diese Weise ist das Antriebsmodul nicht nur durch das Modulgehäuse mechanisch nach außen abgesichert, sondern durch die Verschlüsselung auch signaltechnisch.

Erfindungsgemäß ist die Kommunikationseinheit dazu ausgebildet, Steuerbefehle zu empfangen. Wenn die Kommunikationseinheit dazu ausgebildet ist, derartige, insbesondere von außerhalb des Zweiradschlosses ausgesandte, Steuerbefehle in verschlüsselter Form zu empfangen, könnte die Kommunikationseinheit diese Steuerbefehle grundsätzlich intern einfach als verschlüsselte Steuersignale an die Steuereinheit des Antriebsmoduls weiterleiten. Erfindungsgemäß ist die Kommunikationseinheit aber dazu ausgebildet, in Abhängigkeit von einem jeweiligen empfangenen Steuerbefehl ein jeweiliges Steuersignal zu erzeugen und in verschlüsselter Form an die Steuereinheit des Antriebsmoduls auszugeben. Mit anderen Worten werden die Steuersignale von der Kommunikationseinheit erst neu erzeugt und dann in verschlüsselter Form an die Steuereinheit des Antriebsmoduls übertragen, wobei insbesondere eine andere Art der Verschlüsselung und/oder ein anderes Schließgeheimnis verwendet wird als bei der Kommunikation der Kommunikationseinheit mit externen Geräten. Die Kommunikationseinheit ist also selber zur Verschlüsselung fähig und somit nicht davon abhängig, ob und in welcher Weise die Steuerbefehle, welche sie empfängt, bereits verschlüsselt sind.

Das hat den Vorteil, dass dadurch gewährleistet werden kann, dass die interne Kommunikation zwischen der Kommunikationseinheit und der Steuereinheit des Antriebsmoduls stets tatsächlich verschlüsselt ist und dass dafür eine festgelegte, von der externen Kommunikation unabhängige Art der Verschlüsselung genutzt werden kann. Auf diese Weise kann auch das Antriebsmodul insgesamt unabhängig davon ausgebildet sein, welche Art der Verschlüsselung für die externe Kommunikation genutzt wird. Lediglich die Kommunikationseinheit muss so gewählt werden, dass sie in der Lage ist, die von extern empfangenen Steuerbefehle in verschlüsselte Steuersignale zu übersetzen, die von der Steuereinheit des Antriebsmoduls verstanden und umgesetzt werden können. Die Eigenschaft der Kommunikationseinheit, die Steuersignale selbständig zu erzeugen und in eine verschlüsselte Form zu bringen, in der die Steuersignale dann von der Steuereinheit interpretiert werden können, trägt zur Modularität des elektronischen Zweiradschlosses bei. Denn durch Kombination gleicher jeweiliger Antriebsmodule mit verschiedenen Kommunikationseinheiten können in einfacher Weise verschiedene erfindungsgemäße elektronische Zweiradschlösser bereitgestellt werden, die sich in jeweils unterschiedlicher Weise von außen ansprechen lassen, aber jeweils auf demselben besonders sicher ausgebildeten Antriebsmodul basieren. Das vereinfacht insbesondere die Produktion von an verschiedene Zweiräder oder verschiedene Bedienmittel mit jeweils unterschiedlichen Kommunikationsarten angepassten Zweiradschlössern.

Im Rahmen der internen Kommunikation erfolgt die Übertragung der (verschlüsselten) Steuersignale von der Kommunikationseinheit des Zweiradschlosses zu der Steuereinheit des Antriebsmoduls vorzugsweise kabelgebunden. Auch im Falle einer bidirektionalen Kommunikation kann die Signalübertragung kabelgebunden erfolgen.

Für die Kommunikation mit externen Geräten kann die Kommunikationseinheit eine oder mehrere Schnittstellen aufweisen, die spezifisch für eine bestimmte Kommunikationsübertragung, z.B. funkbasiert oder kabelgebunden, für einen bestimmten Kommunikationsinhalt, z.B. eine Ansteuerung betreffend oder Zustandsinformationen betreffend, und/oder für ein bestimmtes Kommunikationsprotokoll ausgebildet sein können. Gemäß einer vorteilhaften Weiterbildung der Erfindung weist die Kommunikationseinheit eine Schnittstelle auf, um Steuerbefehle, insbesondere per Funk, von einem externen Anwendergerät und/oder von einem Fahrzeugsystem des Zweirads zu empfangen. Eine solche Schnittstelle stellt insofern einen Steuerbefehlseingang dar. Vorzugsweise erfolgt die Kommunikation bidirektional, indem die Kommunikationseinheit beispielsweise auch eine Schnittstelle aufweist, um Statusmeldungen, insbesondere per Funk, an ein externes Anwendergerät und/oder an ein Fahrzeugsystem des Zweirads auszugeben. Eine solche Schnittstelle stellt insofern einen Statusausgang dar.

Mittels derartiger Schnittstellen lässt sich das elektronische Zweiradschloss flexibel in verschiedene Systeme einbinden, die, insbesondere bei elektrisch angetriebenen oder unterstützten Zweirädern, etwa zur Einstellung von Betriebs- und/oder Komfortfunktionen des Zweirads vorgesehen sein können. Ein solches System kann beispielsweise als eine Art Steuergeräte-Netzwerk, z.B. ähnlich einem CAN-Bus wie bei PKW ausgebildet sein. Eine bidirektionale Kommunikation ist aber auch vorteilhaft, wenn das elektronische Zweiradschloss lediglich mit einem einzelnen externen Bediengerät kommuniziert, das etwa dazu dient, einen autorisierten Nutzer anhand eines Schlüssels zu identifizieren und daraufhin das Zweiradschloss mittels entsprechender Steuerbefehle zu entriegeln. Denn anhand der von dem Zweiradschloss ausgesandten Statusmeldungen kann an dem Bediengerät dann nicht nur ein Entriegeln ausgelöst, sondern beispielsweise auch angezeigt werden, ob der Entriegelungs- oder der Verriegelungszustand vorliegt, ob sich das Riegelelement in der Offenstellung oder in der Geschlossenstellung befindet und/oder ob eine Fehlfunktion des Zweiradschlosses vorliegt.

Die Kommunikationseinheit kann beispielsweise dazu ausgebildet sein, über RFID (Radio-Frequency Identification), insbesondere NFC (Near Field Communication), über Bluetooth, GSM (Mobilfunk), Wi-Fi (IEEE 802.11) oder auf sonstige funkbasierte Weise zu kommunizieren. Grundsätzlich kann alternativ oder zusätzlich auch über akustische und/oder optische Signale kommuniziert werden. Ferner kann die Kommunikationseinheit dazu ausgebildet sein, anhand empfangener Signale ihren Ort zu bestimmen, so dass etwa auch ortsabhängig Steuerbefehle empfangen bzw. Steuersignale und/oder Statusmeldungen erzeugt und ausgegeben werden können. Die für eine Ortsbestimmung genutzten Signale können auf einer der genannten Techniken beruhen. Zudem kann die Kommunikationseinheit dazu ausgebildet sein, GPS-Signale zu empfangen und auszuwerten. Alternativ oder ergänzend zu einer funkbasierten Kommunikation kann die Kommunikationseinheit auch für eine kabelgebundene Kommunikation ausgebildet und auf diese Weise insbesondere mit einem Fahrzeugsystem des Zweirades verbunden sein.

Eine weitere Möglichkeit, wie die Kommunikationseinheit von außen angesprochen werden kann, beruht auf magnetischer Wechselwirkung. Diese kann insbesondere dazu genutzt werden, eine manuelle Betätigung, etwa zum Auslösen eines Öffnens oder Schließens, eines Entriegelns oder Verriegelns des Riegelelements, von einer Außenseite des Schlosses zur Kommunikationseinheit zu übertragen. Der Vorteil einer solchen Übertragung besteht darin, dass sie anders als eine Übertragung per Funk stromlos erfolgen kann und keinen Sender erfordert und anders als eine kabelgebundene Übertragung keine Durchbrechung eines Schlossgehäuses des Zweiradschlosses erfordert. Beispielsweise kann das Zweiradschloss ein Schlossgehäuse umfassen, welches das Zweiradschloss im Wesentlichen nach außen begrenzt, wobei dann an einer Außenseite des Schlossgehäuses ein bewegliches Betätigungselement vorgesehen sein kann, das je nach seiner Stellung magnetisch (direkt oder zumindest indirekt, z.B. über einen magnetischen Sensor oder Schalter) auf die Kommunikationseinheit einwirkt und dadurch verschiedene Reaktionen der Kommunikationseinheit auslösen kann.

Insofern bezieht sich die Erfindung, auch unabhängig von den vorstehend beschriebenen Zweiradschlössern, ferner auf ein elektronisches Zweiradschloss mit einem Riegelelement, das zwischen einer Offenstellung und einer Geschlossenstellung beweglich ist, einem Sperrmechanismus, der das Riegelelement in einem Verriegelungszustand gegen ein Verlassen der Geschlossenstellung sperrt und in einem Entriegelungszustand für ein Verlassen der Geschlossenstellung freigibt, einer elektrischen Antriebseinheit, die dazu ausgebildet ist, den Sperrmechanismus in den Entriegelungszustand zu versetzen, und einer Steuereinheit, die dazu ausgebildet ist, die Antriebseinheit anzusteuern, wobei das Zweiradschloss eine Kommunikationseinheit sowie ein Schlossgehäuse umfasst, in welchem zumindest die Kommunikationseinheit aufgenommen ist, wobei an einer von der Kommunikationseinheit abgewandten Außenseite des Schlossgehäuses ein Betätigungselement beweglich gelagert ist, welches dazu ausgebildet ist, die Kommunikationseinheit in Abhängigkeit von seiner jeweiligen Stellung durch das Schlossgehäuse hindurch zum Ausgeben eines Steuersignals an die Steuereinheit magnetisch (direkt oder zumindest indirekt) anzusprechen. Im Übrigen kann das Zweiradschloss gemäß einer der vorstehend beschriebenen Ausführungsformen ausgebildet sein.

Durch ein solches magnetisches Ansprechen der Kommunikationseinheit von außen kann, insbesondere zusätzlich zu Kommunikationsmöglichkeiten aus der Ferne, auch eine lokale Betätigung des elektronischen Zweiradschlosses ermöglicht werden, ohne dass dafür zusätzliche Durchbrechungen im Schlossgehäuse vorgesehen werden müssten. Das Schlossgehäuse kann als Material beispielsweise Kunststoff oder ein anderes magnetisch durchlässiges Material umfassen. Da aufgrund der magnetischen Wechselwirkung ein Ansprechen der Kommunikationseinheit durch das Schlossgehäuse hindurch möglich ist, kann das Schlossgehäuse trotz der Möglichkeit einer lokal von außen erfolgenden manuellen Betätigung weitgehend (vorzugsweise lediglich abgesehen von einer Öffnung, durch die das Riegelelement aus dem Schlossgehäuse ragen, insbesondere aus- bzw. einfahren, kann) verschlossen sein. Auf diese Weise kann eine zuverlässige Abdichtung des Innenraums des Schlossgehäuses und der darin aufgenommenen Komponenten bzw. Module gegenüber Feuchtigkeit und/oder Schmutz erreicht werden.

Das Betätigungselement weist vorzugsweise einen Permanentmagneten auf. Außerdem kann das Betätigungselement in eine bestimmte Stellung vorgespannt sein, wobei dann eine Betätigung zum Auslösen einer Aktion insbesondere durch Versetzen des Betätigungselements in eine entgegengesetzte Stellung erfolgt. Es können auch mehrere Stellungen vorgesehen sein, in denen eine jeweils andere Aktion ausgelöst wird. Bei dem Betätigungselement kann es sich beispielsweise um einen Schiebetaster handeln, der z.B. als federbelasteter Schlitten ausgebildet sein kann, an dem ein Permanentmagnet angeordnet sein kann. Der Permanentmagnet muss dabei aber nicht zwingend an einem unmittelbar betätigten Element vorgesehen sein, sondern kann auch an einem lediglich indirekt betätigten Element oder Bauteil angeordnet sein. Vorzugsweise steht die Stellung des Permanentmagneten aber in einem definierten (direkten oder indirekten) Zusammenhang mit der jeweiligen Stellung oder Betätigung des Betätigungselements. Um auf magnetische Weise ansprechbar zu sein, kann die Kommunikationseinheit beispielsweise einen Magnetfeldsensor oder einen Magnetschalter, z.B. einen Hall-Sensor oder Reed-Kontakt, aufweisen oder für ein zumindest indirektes Ansprechen mit einem solchen Bauteil zumindest verbunden sein, über welches das Vorliegen einer bestimmten Stellung des Betätigungselements bzw. des Permanentmagneten erfasst und daraufhin gegebenenfalls ein Signal ausgelöst werden kann.

Grundsätzlich kann ein derartiges magnetisches Betätigungselement auch bei andersartigen Schlössern vorgesehen sein, um durch eine Betätigung an der Außenseite des Schlosses über das Schlossgehäuse hinweg eine Reaktion im Inneren des Schlosses auszulösen. Daher bezieht sich die Erfindung auch auf ein Schloss mit einem Schließmechanismus, der beispielsweise das genannte Riegelelement und den genannten Sperrmechanismus sowie gegebenenfalls die Steuereinheit und/oder die Antriebseinheit umfassen kann, und einem Schlossgehäuse, in dem der Schließmechanismus aufgenommen ist, wobei das Schloss ferner ein Betätigungselement umfasst, das an einer von dem Schließmechanismus abgewandten Außenseite des Schlossgehäuses beweglich gelagert ist und dazu ausgebildet ist, in Abhängigkeit von seiner jeweiligen Stellung mit dem Schließmechanismus durch das Schlossgehäuse hindurch magnetisch (direkt oder zumindest indirekt) zu wechselwirken, insbesondere einen Kontakt des Schließmechanismus magnetisch zu schalten und/oder ein Verstellen des Schließmechanismus magnetisch auszulösen.

Wie bereits erläutert, ist die elektrische Antriebseinheit dazu ausgebildet, den Sperrmechanismus des Zweiradschlosses in den Entriegelungszustand zu versetzen. Gemäß einer weiteren vorteilhaften Ausführungsform ist die elektrische Antriebseinheit zusätzlich dazu ausgebildet, den Sperrmechanismus in den Verriegelungszustand zu versetzen. Im Gegensatz zu dem Verstellen des Sperrmechanismus in den Entriegelungszustand braucht für ein Verstellen in den Verriegelungszustand nicht unbedingt eine Überprüfung, z.B. anhand eines Schlüssels, zu erfolgen, ob derjenige, der das Verstellen auslösen möchte, dazu auch befugt ist. Gleichwohl trägt es zum Komfort der Betätigung des Zweiradschlosses bei, wenn auch das Verriegeln durch die elektrische Antriebseinheit angetrieben erfolgt. Denn dann braucht das Zweiradschloss für das Verriegeln nicht dort betätigt zu werden, wo es an dem Zweirad angebracht und möglicherweise schlecht zugänglich ist, sondern lässt sich von gut zugänglicher Stelle, z.B. von der Lenkstange, aus oder auch aus der Ferne betätigen. Beispielsweise könnte das Zweiradschloss ähnlich wie ein PKW im Weggehen durch manuelle Betätigung eines Funksenders oder automatisch durch den infolge des Weggehens erfolgenden Abbruch einer Nahfunkverbindung verriegelt werden. Jedoch ist vorzugsweise eine Sicherheitseinrichtung und/oder Sicherheitsüberprüfung vorgesehen, um zu verhindern, dass das Riegelelement versehentlich während der Fahrt in die Geschlossenstellung bewegt wird.

Die genannte Steuereinheit kann beispielsweise als Mikrocontroller ausgebildet sein oder einen Mikrocontroller umfassen. Über die elektrische Antriebseinheit kann die Steuereinheit den Sperrmechanismus in den Entriegelungszustand versetzen. Der Sperrmechanismus kann beispielsweise ein Sperrelement umfassen, das zwischen einer Verriegelungsstellung, in der es das Riegelelement in dessen Geschlossenstellung hintergreift und so gegen ein Verlassen der Geschlossenstellung sperrt, und einer Entriegelungsstellung, in der es das Riegelelement für ein Verlassen der Geschlossenstellung freigibt, beweglich ist, wobei die Antriebseinheit dazu ausgebildet ist, das Sperrelement, insbesondere in Abhängigkeit von einer entsprechenden Ansteuerung durch die Steuereinheit, in die Entriegelungsstellung bzw. gegebenenfalls auch in die Verriegelungsstellung zu bewegen.

Alternativ könnte die Sperrwirkung des Sperrmechanismus aber auch auf eine andere Weise als mittels eines das Riegelelement hintergreifenden Sperrelements erreicht werden, beispielsweise durch eine Hemmung der elektrischen Antriebseinheit, insbesondere wenn diese in einem festen Antriebszusammenhang mit dem Riegelelement steht. Insofern kann der Sperrmechanismus auch in die elektrische Antriebseinheit integriert sein. Beispielsweise kann die elektrische Antriebseinheit einen Elektromotor umfassen, dessen Ausgang direkt oder über ein Getriebe mit dem Riegelelement antriebswirksam verbunden ist. Wenn der Elektromotor im Stillstand selbsthemmend ist, kann der Verriegelungszustand dann grundsätzlich auch durch bloßes Stillsetzen des Elektromotors erreicht werden. Das Vorsehen eines gesonderten Sperrmechanismus, der das Riegelelement insbesondere in mechanischer Weise, vorzugsweise formschlüssig, gegen ein Verlassen der Geschlossenstellung sperrt, ist aber bevorzugt, da auf diese Weise eine größere Zuverlässigkeit gegen den Versuch eines gewaltsamen Versetzens des Riegelelements in die Offenstellung erreicht werden kann.

Des Weiteren ist es vorteilhaft, wenn die elektrische Antriebseinheit zusätzlich dazu ausgebildet ist, das Riegelelement in die Offenstellung und/oder in die Geschlossenstellung zu bewegen. Die elektrische Antriebseinheit kann bei einer solchen Ausführungsform also nicht lediglich dazu genutzt werden, den Entriegelungszustand und gegebenenfalls auch den Verriegelungszustand des Sperrmechanismus einzustellen, um das Riegelelement zu entriegeln bzw. in dessen Geschlossenstellung zu verriegeln, sondern auch dazu, das Riegelelement aktiv aus der Offenstellung in die Geschlossenstellung und/oder, sofern es entriegelt ist, umgekehrt aus der Geschlossenstellung in die Offenstellung zu bewegen. Ein solches elektronisches Zweiradschloss braucht dann überhaupt nicht manuell betätigt zu werden, sondern lässt sich komfortablerweise vollständig aus der Ferne bedienen.

Ferner umfasst das elektronische Zweiradschloss erfindungsgemäß ein Schlossgehäuse, in welchem das Antriebsmodul und die Kommunikationseinheit sowie gegebenenfalls weitere Module des Zweiradschlosses aufgenommen sind. Mit anderen Worten weist das elektronische Zweiradschloss zumindest zwei Gehäuse auf, nämlich einerseits das Schlossgehäuse, welches insbesondere dazu dient, im Wesentlichen das gesamte Zweiradschloss nach außen abzugrenzen, und andererseits das Modulgehäuse des Antriebsmoduls, welches in dem Schlossgehäuses aufgenommen ist. Dadurch ergibt sich eine zumindest zweistufige mechanische Absicherung der Komponenten des Antriebsmoduls, die zusammen mit weiteren Komponenten des Zweiradschlosses erst einmal durch das Schlossgehäuse geschützt sind, zusätzlich innerhalb des Schlossgehäuses aber noch durch das Modulgehäuse geschützt werden, das insbesondere härter und/oder mechanisch stabiler als das Schlossgehäuse ausgebildet ist.

Insbesondere das Riegelelement ist zweckmäßigerweise zumindest in der Geschlossenstellung nicht vollständig in dem Schlossgehäuse aufgenommen, da es für die Schließfunktion des Zweiradschlosses mit dem Zweirad, insbesondere den Speichen eines Rades, außerhalb des Zweiradschlosses zusammenwirken muss. Ferner muss zwischen der elektrischen Antriebseinheit und dem Riegelelement ein Antriebszusammenhang bestehen, der über das Modulgehäuse, in dem die Antriebseinheit aufgenommen ist, hinweg erfolgen können muss. Dazu kann etwa ein Getriebe die elektrische Antriebseinheit in dem Modulgehäuse mit dem Riegelelement außerhalb des Modulgehäuses antriebswirksam koppeln. Gemäß einer bevorzugten Ausführungsform ist das Riegelelement dagegen zumindest teilweise in dem Modulgehäuse des Antriebsmoduls aufgenommen, so dass die elektrische Antriebseinheit innerhalb des Modulgehäuses mit dem Riegelelement zusammenwirken kann. Auf diese Weise wird auch das Zusammenwirken der Antriebseinheit mit dem Riegelelement durch das Modulgehäuse mechanisch vor einem Eingriff von außen geschützt. Zudem kann bei einer solchen Ausführungsform auch der Sperrmechanismus vorteilhafterweise innerhalb des Modulgehäuses mit dem Riegelelement zusammenwirken, so dass auch die Sperrung des Riegelelements im Verriegelungszustand vor Eingriffen von außen geschützt ist.

Insbesondere im Zusammenhang mit der Ausgabe von Statusmeldungen ist es ferner vorteilhaft, wenn das Antriebsmodul zumindest einen Sensor umfasst, der dazu ausgebildet ist, eine Stellung des Riegelelements, einen Zustand des Sperrmechanismus und/oder einen Zustand der Antriebseinheit zu erfassen und an die Steuereinheit auszugeben. Mittels eines solchen Sensors lässt sich dann insbesondere feststellen, ob sich das Riegelelement in der Offenstellung oder der Geschlossenstellung befindet und/oder ob der Verriegelungszustand oder der Entriegelungszustand des Sperrmechanismus vorliegt. Als Zustände der Antriebseinheit kann mittels des Sensors beispielsweise auch erfassbar sein, ob die Antriebseinheit stillsteht oder das Riegelelement gerade antreibt, vorzugsweise auch in welche Richtung sie es gegebenenfalls antreibt. Solche Sensoren können z.B. als Drehgeber oder Positionsgeber ausgebildet sein und z.B. Hall-Sensoren und/oder Mikroschalter umfassen.

Gemäß einer vorteilhaften Ausführungsform ist die Steuereinheit dazu ausgebildet, ein Statussignal an die Kommunikationseinheit auszugeben. Das Statussignal basiert dabei vorteilhafterweise auf Informationen, welche die Steuereinheit von einem oder mehreren Sensoren des Antriebsmoduls empfängt. Vorzugsweise gibt die Steuereinheit das Statussignal in verschlüsselter Form an die Kommunikationseinheit aus. Insbesondere kann also zwischen der Steuereinheit und der Kommunikationseinheit eine bidirektionale Kommunikation stattfinden, die in beide Richtungen verschlüsselt ist. Somit kann die gesamte interne Kommunikation innerhalb des Zweiradschlosses verschlüsselt sein, so dass insgesamt eine hohe Sicherheit vor signaltechnischen Manipulationen erreicht wird.

Neben dem Antriebsmodul und der Kommunikationseinheit, die vorzugsweise auch als Modul ausgebildet ist, kann das elektronische Zweiradschloss noch weitere Module aufweisen, die als abgeschlossene funktionale Einheiten ausgebildet sind. Insbesondere ist es vorteilhaft, wenn das elektronische Zweiradschloss ferner ein Energiemodul umfasst, das dazu ausgebildet ist, das Antriebsmodul sowie gegebenenfalls die Kommunikationseinheit mit Energie zu versorgen. Da sich ein Energiemodul leichter austauschen lässt als eine integrierte Energieversorgung, hat eine solche Ausführungsform den Vorteil, dass das Zweiradschloss durch Wahl eines geeigneten jeweiligen Energiemoduls einfach an die jeweils zur Verfügung stehende Energiequelle und deren Spezifikationen anpassbar sein kann. So können z.B. für verschiedene Betriebsspannungen verschiedene Energiemodule vorgesehen werden.

Gemäß einer Weiterbildung einer solchen Ausführungsform umfasst das Energiemodul eine Energiespeichereinrichtung und/oder eine Schnittstelle, über die es von einer externen Energiequelle, einem externen Energiespeicher oder einem Fahrzeugsystem des Zweirads mit Energie versorgt wird. Die Energiespeichereinrichtung kann beispielsweise eine Batterie oder ein Akku sein, so dass das elektronische Zweiradschloss von einer externen Energieversorgung unabhängig sein kann. Das elektronische Zweiradschloss kann seine Energie aber alternativ oder zusätzlich auch von einer externen Energiequelle, wie etwa einem Dynamo, beziehen. Bei Verwendung des elektronischen Zweiradschlosses an einem Zweirad, das einen elektrischen (Hilfs-)Antrieb aufweist und für diesen ohnehin einen Energiespeicher mitführt, kann das Energiemodul ferner auch dazu ausgebildet sein, Energie von diesem bezüglich des Zweiradschlosses externen Energiespeicher zu beziehen. Auf diese Weise braucht ein Nutzer den Ladezustand lediglich eines Energiespeichers zu überwachen, um diesen rechtzeitig zu ersetzen oder aufzuladen. Das elektronische Zweiradschloss kann dabei mit dem externen Energiespeicher direkt oder aber über ein von dem Energiespeicher gespeistes Fahrzeugsystem des jeweiligen Zweirades verbunden sein.

Des Weiteren ist es vorteilhaft, wenn eine Kommunikationsplatine der Kommunikationseinheit und/oder die Energiespeichereinrichtung des Energiemoduls, vorzugsweise die gesamte Kommunikationseinheit und/oder das gesamte Energiemodul, für einen Austausch auf einfache Weise zugänglich sind oder zumindest zugänglich gemacht werden können. Dazu kann das Zweiradschloss eine Struktur aufweisen, die nach Art einer Schublade aus dem übrigen Zweiradschloss, insbesondere aus einem Schlossgehäuse des Zweiradschlosses, herausgezogen werden und wieder hineingeschoben werden kann, wobei die Kommunikationsplatine und/oder die Energiespeichereinrichtung bzw. die Kommunikationseinheit und/oder das Energiemodul in dieser Struktur aufgenommen oder an dieser Struktur gelagert sind. Dadurch können diese Elemente auf einfache Weise durch Herausziehen der schubladenartigen Struktur z.B. für einen Austausch zugänglich gemacht werden. Dabei kann die Struktur grundsätzlich vollständig aus dem übrigen Zweiradschloss entnehmbar sein. Es kann aber auch ausreichen, wenn die Struktur nur bis in eine Offenstellung aus dem übrigen Zweiradschloss gezogen werden kann, in der die jeweiligen Elemente aus der Struktur entnommen bzw. von dieser gelöst werden können. Nach dem Einsetzen oder Anbringen neuer Elemente kann die schubladenartige Struktur dann zurück in eine Geschlossenstellung geschoben werden, in der sie in dem Schlossgehäuse aufgenommen ist, mit dem sie dann vorzugsweise im Wesentlichen bündig abschließt. Das Zweiradschloss kann dabei dazu ausgebildet sein, dass beim Einsetzen oder Anbringen eines Elements in oder an der Struktur oder beim Erreichen der Geschlossenstellung automatisch Kontakte zwischen den in oder an der Struktur angeordneten Elementen und anderen Elementen des Zweiradschlosses hergestellt werden, z.B. die Energiespeichereinrichtung automatisch mit dem Antriebsmodul verbunden wird, um dieses mit Energie zu versorgen.

Die genannte schubladenartige Struktur kann insbesondere durch ein zu einer Seite offenes herausziehbares Fach gebildet werden. Dabei kann die Struktur auch einen Deckel umfassen, um die genannte offene Seite des Faches zu verschließen. Der Deckel lässt sich vorzugsweise erst öffnen, wenn die Struktur zumindest teilweise aus dem übrigen Zweiradschloss herausgezogen ist. Auf diese Weise sind die in dem Fach aufgenommenen Elemente nach außen gesichert und insbesondere davor geschützt, beim Herausziehen der schubladenartigen Struktur direkt aus dem Fach herauszufallen.

Grundsätzlich kann eine derartige schubladenartige Struktur auch bei andersartigen Schlössern vorgesehen sein, um eine Kommunikationseinheit, ein Energiemodul, ein Element davon oder ein sonstiges Element des Schlosses, insbesondere ein Funktionselement, das zu einer Funktion des Schlosses beiträgt, etwa für einen Austausch zugänglich zu machen. Daher bezieht sich die Erfindung, auch unabhängig von den vorstehend beschriebenen Zweiradschlössern, ferner auf ein Schloss, welches eine Struktur aufweist, die nach Art einer Schublade aus dem übrigen Schloss, insbesondere einem Schlossgehäuse des Schlosses, herausgezogen werden und wieder hineingeschoben werden kann, wobei vorzugsweise ein Element des Schlosses in dieser Struktur aufgenommen oder an dieser Struktur gelagert ist, insbesondere um für einen Austausch zugänglich zu sein. Das Schloss kann im Übrigen einzelne oder mehrere Merkmale der vorstehend beschriebenen Zweiradschlösser aufweisen. Zudem kann die genannte schubladenartige Struktur insbesondere in einer der vorstehend für die schubladenartige Struktur eines Zweiradschlosses beschriebenen Weisen ausgebildet sein.

Das erfindungsgemäße modulare System zur Ausbildung eines elektronischen Zweiradschlosses umfasst ein Antriebsmodul mit einem Modulgehäuse, in welchem zumindest ein Sperrmechanismus, der in einem Verriegelungszustand ein Riegelelement eines Zweiradschlosses gegen das Verlassen einer Geschlossenstellung sperrt und in einem Entriegelungszustand das Riegelelement für ein Verlassen der Geschlossenstellung in eine Offenstellung freigibt, eine elektrische Antriebseinheit, die dazu ausgebildet ist, den Sperrmechanismus in den Entriegelungszustand zu versetzen, und eine Steuereinheit, die dazu ausgebildet ist, die Antriebseinheit anzusteuern, aufgenommen sind. Zudem umfasst das System mehrere verschiedenartige Kommunikationsmodule, die dazu ausgebildet sind, Steuersignale zu erzeugen und in verschlüsselter Form an die Steuereinheit des Antriebsmoduls auszugeben, und von denen zur Ausbildung des Zweiradschlosses ein jeweiliges Kommunikationsmodul ausgewählt und mit dem Antriebsmodul verbunden werden kann. Das Antriebsmodul und die Kommunikationsmodule können zu diesem Zweck speziell für das Verbinden eines jeweiligen Kommunikationsmoduls mit dem Antriebsmodul ausgebildet sein. Das modulare System ist insbesondere zur Ausbildung eines Zweiradschlosses gemäß einer der vorstehend beschriebenen Ausführungsformen geeignet ausgebildet.

Das Antriebmodul kann insbesondere entsprechend dem jeweiligen Antriebsmodul einer der vorstehend beschriebenen Ausführungsformen eines erfindungsgemäßen Zweiradschlosses ausgebildet sein. Ferner können die Kommunikationsmodule jeweils entsprechend einer jeweiligen Kommunikationseinheit der vorstehend beschriebenen Ausführungsformen eines erfindungsgemäßen Zweiradschlosses ausgebildet sein oder jeweils eine solche Kommunikationseinheit umfassen.

Das modulare System erlaubt es, zur Ausbildung verschiedener elektronischer Zweiradschlösser, die zwar einen grundsätzlich ähnlichen Aufbau aufweisen, sich aber insbesondere hinsichtlich ihrer jeweiligen Kommunikationsfähigkeiten unterscheiden können, jeweils dasselbe Antriebsmodul zu verwenden und durch dessen Kombination mit einem geeignet gewählten Kommunikationsmodul die jeweils gewünschten Kommunikationsfähigkeiten zu erhalten. Dadurch, dass dabei das Antriebsmodul in einem eigenen Modulgehäuse vorteilhafterweise eingekapselt ist und dass das jeweilige Kommunikationsmodul Steuersignale in verschlüsselter Form an die Steuereinheit des Antriebsmoduls überträgt, ist unabhängig davon, welches Kommunikationsmodul für das jeweilige Zweiradschloss gewählt wird, gewährleistet, dass das jeweilige so ausgebildete Zweiradschloss eine besonders hohe Sicherheit gegenüber Manipulationsversuchen aufweist.

Die mehreren Kommunikationsmodule, aus denen zur Ausbildung eines jeweiligen Zweiradschlosses je nach spezifischen Anforderungen ein jeweiliges ausgewählt werden kann, können sich insbesondere hinsichtlich der Technik unterscheiden, auf der die jeweilige Kommunikation beispielsweise mit einem externen Anwendergerät und/oder einem Fahrzeugsystem des Zweirades beruhen soll. Mögliche Techniken sind dabei z.B. Funktechniken wie etwa RFID, NFC, Bluetooth und/ oder GSM sowie gegebenenfalls alternativ oder ergänzend GPS. Auch eine optisehe oder akustische Signalübertragung kommt grundsätzlich in Betracht. Ferner können ein oder mehrere Kommunikationsmodule des modularen Systems für eine kabelgebundene Kommunikation, z.B. über eine entsprechende Schnittstelle zu einem Fahrzeugsystem des Zweirades, ausgebildet sein. Zusätzlich kommt ferner auch ein magnetisches Ansprechen eines jeweiligen Kommunikationsmoduls in Betracht, wie es vorstehend insbesondere für ein elektronisches Zweiradschloss beschrieben wurde. Dazu kann das jeweilige Kommunikationsmodul etwa einen Magnetfeldsensor oder einen Magnetschalter aufweisen oder zumindest indirekt über ein solches Bauteil ansprechbar sein.

Gemäß einer vorteilhaften Weiterbildung umfasst das System ferner mehrere verschiedenartige Energiemodule, die dazu ausgebildet sind, das Antriebsmodul sowie gegebenenfalls das jeweilige Kommunikationsmodul mit Energie zu versorgen, und von denen zur Ausbildung des Zweiradschlosses ein jeweiliges Energiemodul ausgewählt und mit dem Antriebsmodul sowie gegebenenfalls dem jeweiligen Kommunikationsmodul verbunden werden kann. Durch die Wahl zwischen verschiedenartigen Energiemodulen kann eine noch größere Anzahl an Zweiradschloss-Varianten realisiert werden, wobei ein jeweiliges Zweiradschloss unabhängig von seinen jeweiligen durch das verwendete Kommunikationsmodul definierten Kommunikationsfähigkeiten individuell im Hinblick auf eine jeweils gewünschte Art der Energieversorgung angepasst werden kann. Die Energiemodule können dabei insbesondere entsprechend dem jeweiligen Energiemodul einer der vorstehend beschriebenen Ausführungsformen eines erfindungsgemäßen Zweiradschlosses ausgebildet sein. Beispielsweise kann ein jeweiliges Energiemodul als ein Akku, eine Batterie oder eine Schnittstelle zu einer externen Energieversorgung oder zu einem Fahrzeugsystem des Zweirades ausgebildet sein oder ein derartiges Element zumindest umfassen.

Die Erfindung wird nachfolgend lediglich beispielhaft unter Bezugnahme auf die Figur weiter erläutert.

Die Figur zeigt in schematischer Darstellung eine Übersicht über die Anordnung und das Zusammenwirken der Elemente einer Ausführungsform des erfindungsgemäßen Zweiradschlosses. Diese Ausführungsform stellt zudem das Ergebnis der Ausbildung eines Zweiradschlosses mittels einer Ausführungsform des erfindungsgemäßen modularen Systems dar, wobei von den mehreren Kommunikationsmodulen und mehreren Energiemodulen, die dieses System zu Verfügung stellt, nur dasjenige Kommunikationsmodul und dasjenige Energiemodul gezeigt sind, die für das konkret ausgebildete Zweiradschloss ausgewählt und verwendet wurden.

Das dargestellte elektronische Zweiradschloss 11 umfasst ein Schlossgehäuse 13, in welchem ein Antriebsmodul 15, eine als gesondertes Kommunikationsmodul ausgebildete Kommunikationseinheit 17 und ein Energiemodul 19 aufgenommen sind. Ein Riegelelement 21 des Zweiradschlosses 11 ragt teilweise aus dem Schlossgehäuse 13 heraus, um in einer Geschlossenstellung zwischen die Speichen eines der Räder eines nicht dargestellten Zweirades, an dem das Zweiradschloss 11 angeordnet ist, einzugreifen und dadurch das Rad zu blockieren. Das Riegelelement 21 ist zwischen der Geschlossenstellung und einer Offenstellung, in der die Blockierung des Rades aufgehoben ist, versetzbar. Anders als schematisch dargestellt kann das Riegelelement 21 insbesondere als ein Rundbügel ausgebildet sein und eine kreissegmentartige Form aufweisen.

Das Antriebsmodul 15 umfasst einen Sperrmechanismus 23, der zwischen einem Verriegelungszustand, in dem er das Riegelelement 21 in dessen Geschlossenstellung sperrt, und einem Entriegelungszustand, in dem er das Riegelelement 21 für ein Verlassen der Geschlossenstellung freigibt, verstellbar ist. Das Antriebsmodul 15 umfasst ferner eine elektrische Antriebseinheit 25, die derart antriebswirksam mit dem Sperrmechanismus 23 gekoppelt ist, dass sie den Sperrmechanismus 23 aus dem Verriegelungszustand in den Entriegelungszustand verstellen kann. Wie durch einen Pfeil symbolisiert wird, kann die elektrische Antriebseinheit 25 von einer Steuereinheit 27 des Antriebsmoduls 15 zu einem solchen Verstellen des Sperrmechanismus 23 angesteuert werden. Auf diese Weise kann mittels des Antriebsmoduls 15 die Verriegelung des Riegelelements 21 in der Geschlossenstellung aufgehoben werden.

Des Weiteren umfasst das Antriebsmodul 15 mehrere Sensoren 29, die schematisch als ein einzelner Block dargestellt sind und insgesamt dazu ausgebildet sind zu erfassen, in welcher Stellung sich das Riegelelement 21 befindet, welchen Zustand der Sperrmechanismus 23 einnimmt und ob die elektrische Antriebseinheit 25 in Betrieb ist. Die so erfasste Information wird von den Sensoren 29 an die Steuereinheit 27 ausgegeben, was durch einen Pfeil zwischen den Sensoren 29 und der Steuereinheit 27 symbolisiert wird.

Das Antriebsmodul 15 weist ein Modulgehäuse 31 auf, in welchem der Sperrmechanismus 23, die elektrische Antriebseinheit 25, die Steuereinheit 27 und die Sensoren 29 vollständig aufgenommen sind und in das auch das Riegelelement 21 teilweise aufgenommen ist. Das Modulgehäuse 31 grenzt das Antriebsmodul 15 gegenüber dem Kommunikationsmodul 17 und dem Energiemodul 19 ab und ist vollständig innerhalb des Schlossgehäuses 13 angeordnet, so dass die Komponenten des Antriebsmoduls 15 zweifach eingehaust sind, nämlich einerseits durch das Schlossgehäuse 13 sowie andererseits zusätzlich durch das Modulgehäuse 31. Durch diese zusätzliche Einkapselung in dem Modulgehäuse 31 sind die Komponenten des Antriebsmoduls 15 besonders sicher gegen Eingriff von außen geschützt.

Das Kommunikationsmodul 17 ist mit der Steuereinheit 27 des Antriebsmoduls 15 signaltechnisch verbunden, so dass es Steuersignale 33 an die Steuereinheit 27 ausgeben und von der Steuereinheit 27 Statussignale 35 empfangen kann. Zumindest die Steuersignale 33 werden dabei in verschlüsselter Form übertragen.

Dadurch wird ausgeschlossen, dass die Steuereinheit 27 von außen in manipulativer Weise angesprochen werden kann. Das Kommunikationsmodul 17 ist dazu ausgebildet, die Steuersignale 33 zu erzeugen und zu verschlüsseln. Erzeugt werden die Steuersignale 33 dabei in Abhängigkeit von Steuerbefehlen, welche das Kommunikationsmodul 17 von außerhalb des Zweiradschlosses 11, z.B. von einem externen Anwendergerät oder einem Fahrzeugsystem des Zweirads, empfängt.

Für die Kommunikation mit derartigen externen Geräten oder Systemen weist das Kommunikationsmodul 17 des gezeigten Zweiradschlosses eine Schnittstellen 37 auf, die zur funkbasierten Kommunikation ausgebildet ist. In der Figur ist auch eine weitere Schnittstelle 37' des Kommunikationsmoduls 17 gezeigt, die zur kabelgebundenen Kommunikation ausgebildet ist und alternativ oder zusätzlich zu der funkbasierten Schnittstelle 37 vorgesehen sein kann. Zudem ist das Kommunikationsmodul 17 zur Verwendung eines bestimmten Kommunikationsprotokolls für die Kommunikation mit externen Geräten oder Systemen ausgebildet. Auch diese externe Kommunikation erfolgt insbesondere verschlüsselt, wobei die Art der Verschlüsselung nicht derjenigen der für die interne Signalübertragung verwendeten Verschlüsselung entsprechen muss.

Soll das Zweiradschloss 11 für die externe Kommunikation ein anderes Kommunikationsprotokoll unterstützen und/oder andere Schnittstellen aufweisen, so kann aufgrund des modularen Aufbaus des Zweiradschlosses bei dessen Fertigung einfach ein entsprechend anders ausgebildetes Kommunikationsmodul verbaut werden. Zudem kann das Kommunikationsmodul 17 in dem Zweiradschloss 17 auch gegen ein anderes Kommunikationsmodul austauschbar sein. Die Art der Signalübertragung zwischen dem jeweiligen Kommunikationsmodul 17 und dem Antriebsmodul 15 ändert sich dabei vorteilhafterweise nicht, so dass jeweils dasselbe Antriebsmodul 15 verwendet werden kann. Über die jeweils vorgesehene Schnittstelle 37, 37' kann das Kommunikationsmodul 17 insbesondere Steuerbefehle empfangen und in Abhängigkeit von empfangenen Steuerbefehlen Steuersignale 33 erzeugen, die es dann in verschlüsselter Form an die Steuereinheit 27 des Antriebsmoduls 15 ausgibt.

Als weiteres Modul umfasst das elektronische Zweiradschloss 11 das Energiemodul 19, das bei der gezeigten Ausführungsform einen Energiespeicher in Form eines Akkus umfasst. Von dem Energiemodul 19 werden sowohl das Antriebsmodul 15 als auch das Kommunikationsmodul 17 mit Energie versorgt, was jeweils durch unterbrochene Pfeile symbolisiert wird. Ähnlich dem Kommunikationsmodul 17 kann auch das Energiemodul 19 nach Bedarf aus mehreren verschiedenen Energiemodulen ausgewählt werden, wobei ein alternatives Energiemodul z.B. für einen Anschluss an einen zentralen Energiespeicher des Zweirades ausgebildet sein kann, so dass ein solches Energiemodul die Energie dann nicht selber speichert, sondern im Wesentlichen nur weiterleitet. Dabei kann beispielsweise auch eine Spannungstransformation erfolgen, wobei für unterschiedliche gewünschte Transformationen verschiedene Energiemodule vorgesehen sein können. Zudem kann ein Energiemodul etwa auch einen Pufferspeicher zur Zwischenspeicherung extern bezogener Energie umfassen.

Aufgrund seiner Modularität ist das Zweiradschloss 11 mit vielen verschiedenen Zweirädern nutzbar und ermöglicht dem jeweiligen Anwender eine komfortabel zu bedienende Sicherung seines Zweirads. Dass das Antriebsmodul 15 in einem eigenen Modulgehäuse 31 eingekapselt ist und dass die interne Kommunikation zwischen dem Kommunikationsmodul 17 und dem Antriebsmodul 15 erfindungsgemäß verschlüsselt ist, wobei diese interne Verschlüsselung grundsätzlich unabhängig von der Art der externen Kommunikation ist, sorgen zudem für ein hohes Maß an Sicherheit gegenüber mechanischen und signaltechnischen Manipulationen.

### Bezuqszeichen

- 11: elektronisches Zweiradschloss
- 13: Schlossgehäuse
- 15: Antriebsmodul
- 17: Kommunikationseinheit/Kommunikationsmodul
- 19: Energiemodul
- 21: Riegelelement
- 23: Sperrmechanismus
- 25: elektrische Antriebseinheit
- 27: Steuereinheit
- 29: Sensoren
- 31: Modulgehäuse
- 33: Steuersignal
- 35: Statussignal
- 37, 37': Schnittstelle

## Patentansprüche

1. Elektronisches Zweiradschloss (11) mit einem Riegelelement (21), das zwischen einer Offenstellung und einer Geschlossenstellung beweglich ist, einem Sperrmechanismus (23), der das Riegelelement (21) in einem Verriegelungszustand gegen ein Verlassen der Geschlossenstellung sperrt und in einem Entriegelungszustand für ein Verlassen der Geschlossenstellung freigibt, einer elektrischen Antriebseinheit (25), die dazu ausgebildet ist, den Sperrmechanismus (23) in den Entriegelungszustand zu versetzen, und einer Steuereinheit (27), die dazu ausgebildet ist, die Antriebseinheit (25) anzusteuern,
wobei das Zweiradschloss (11) modular aufgebaut ist und ein Antriebsmodul (15) sowie eine Kommunikationseinheit (17) umfasst,
wobei das Antriebsmodul (15) ein Modulgehäuse (31) umfasst, in welchem zumindest der Sperrmechanismus (23), die Antriebseinheit (25) und die Steuereinheit (27) aufgenommen sind, um vor mechanischen Einwirkungen von außen geschützt zu sein, und welches das Antriebsmodul (15) gegenüber der Kommunikationseinheit (17) sowie gegebenenfalls weiteren Modulen des Zweiradschlosses (11) abgrenzt,
**dadurch gekennzeichnet,**
**dass** das elektronische Zweiradschloss (11) ferner ein Schlossgehäuse (13) umfasst, in welchem das Antriebsmodul (15) und die Kommunikationseinheit (17) sowie gegebenenfalls die weiteren Module des Zweiradschlosses (11) aufgenommen sind,
wobei die Kommunikationseinheit (17) dazu ausgebildet ist, Steuerbefehle zu empfangen und in Abhängigkeit von einem jeweiligen empfangenen Steuerbefehl ein jeweiliges Steuersignal (33) zu erzeugen und in verschlüsselter Form an die Steuereinheit (27) des Antriebsmoduls (15) auszugeben, und wobei die Steuereinheit (27) dazu ausgebildet ist, von der Kommunikationseinheit (17) Steuersignale (33) in verschlüsselter Form zu empfangen und die Antriebseinheit (25) in Reaktion auf die Steuersignale (33) anzusteuern.

2. Zweiradschloss nach Anspruch 1,
wobei die Kommunikationseinheit (17) eine Schnittstelle (37) aufweist, um Steuerbefehle, insbesondere per Funk, von einem externen Anwendergerät und/oder von einem Fahrzeugsystem des Zweirads zu empfangen, sowie vorzugsweise eine Schnittstelle (37) aufweist, um Statusmeldungen, insbesondere per Funk, an ein externes Anwendergerät und/oder an ein Fahrzeugsystem des Zweirads auszugeben.

3. Zweiradschloss nach zumindest einem der vorstehenden Ansprüche, wobei das Zweiradschloss (11) ein Schlossgehäuse (13) umfasst, in welchem zumindest die Kommunikationseinheit (17) aufgenommen ist, wobei an einer von der Kommunikationseinheit (17) abgewandten Außenseite des Schlossgehäuses (13) ein, vorzugsweise vorgespanntes, Betätigungselement, insbesondere mit einem Permanentmagneten, beweglich gelagert ist, welches dazu ausgebildet ist, die Kommunikationseinheit (17) in Abhängigkeit von seiner jeweiligen Stellung durch das Schlossgehäuse (13) hindurch zum Ausgeben eines Steuersignals (33) an die Steuereinheit (27) magnetisch anzusprechen.

4. Zweiradschloss nach zumindest einem der vorstehenden Ansprüche, wobei die elektrische Antriebseinheit (25) zusätzlich dazu ausgebildet ist, den Sperrmechanismus (23) in den Verriegelungszustand zu versetzen.

5. Zweiradschloss nach zumindest einem der vorstehenden Ansprüche, wobei die elektrische Antriebseinheit (25) zusätzlich dazu ausgebildet ist, das Riegelelement (21) in die Offenstellung und/oder in die Geschlossenstellung zu bewegen.

6. Zweiradschloss nach zumindest einem der vorstehenden Ansprüche, wobei das Riegelelement (21) zumindest teilweise in dem Modulgehäuse (31) des Antriebsmoduls (15) aufgenommen ist.

7. Zweiradschloss nach zumindest einem der vorstehenden Ansprüche, wobei das Antriebsmodul (15) ferner zumindest einen Sensor (29) umfasst, der dazu ausgebildet ist, eine Stellung des Riegelelements (21), einen Zustand des Sperrmechanismus (23) und/oder einen Zustand der Antriebseinheit (25) zu erfassen und an die Steuereinheit (27) auszugeben.

8. Zweiradschloss nach zumindest einem der vorstehenden Ansprüche, wobei die Steuereinheit (27) dazu ausgebildet ist, ein Statussignal (35), insbesondere in verschlüsselter Form, an die Kommunikationseinheit (17) auszugeben.

9. Zweiradschloss nach zumindest einem der vorstehenden Ansprüche, wobei das elektronische Zweiradschloss (11) ferner ein Energiemodul (19) umfasst, das dazu ausgebildet ist, das Antriebsmodul (15) sowie gegebenenfalls die Kommunikationseinheit (17) mit Energie zu versorgen.

10. Zweiradschloss nach Anspruch 9,
wobei das Energiemodul (19) eine Energiespeichereinrichtung umfasst und/oder eine Schnittstelle, über die es von einer externen Energiequelle, einem externen Energiespeicher oder einem Fahrzeugsystem des Zweirads mit Energie versorgt wird, umfasst.

11. Zweiradschloss nach zumindest einem der vorstehenden Ansprüche, wobei das Zweiradschloss (11) eine Struktur aufweist, die nach Art einer Schublade aus dem übrigen Zweiradschloss (11), insbesondere einem Schlossgehäuse (13) des Zweiradschlosses (11), herausgezogen werden und wieder hineingeschoben werden kann, wobei die Kommunikationseinheit (17), insbesondere eine Kommunikationsplatine der Kommunikationseinheit, und/oder gegebenenfalls das Energiemodul (19), insbesondere die Energiespeichereinrichtung des Energiemoduls (19), in dieser Struktur aufgenommen oder an dieser Struktur gelagert ist/sind, um für einen Austausch zugänglich zu sein.

12. Modulares System zur Ausbildung eines Zweiradschlosses (11) nach zumindest einem der vorstehenden Ansprüche,
wobei das System ein Antriebsmodul (15) mit einem Modulgehäuse (31) umfasst, in welchem zumindest ein Sperrmechanismus (23), der in einem Verriegelungszustand ein Riegelelement (21) eines Zweiradschlosses gegen das Verlassen einer Geschlossenstellung sperrt und in einem Entriegelungszustand das Riegelelement (21) für ein Verlassen der Geschlossenstellung in eine Offenstellung freigibt, eine elektrische Antriebseinheit (25), die dazu ausgebildet ist, den Sperrmechanismus (23) in den Entriegelungszustand zu versetzen, und eine Steuereinheit (27), die dazu ausgebildet ist, die Antriebseinheit (25) anzusteuern, aufgenommen sind,
und wobei das System mehrere verschiedenartige Kommunikationsmodule (17) umfasst, die dazu ausgebildet sind, Steuersignale (33) zu erzeugen und in verschlüsselter Form an die Steuereinheit (27) des Antriebsmoduls (15) auszugeben, und von denen zur Ausbildung des Zweiradschlosses (11) ein jeweiliges Kommunikationsmodul (17) ausgewählt und mit dem Antriebsmodul (15) verbunden werden kann.

13. Modulares System nach Anspruch 12,
wobei das System ferner mehrere verschiedenartige Energiemodule (19) umfasst, die dazu ausgebildet sind, das Antriebsmodul (15) sowie gegebenenfalls das jeweilige Kommunikationsmodul (17) mit Energie zu versorgen, und von denen zur Ausbildung des Zweiradschlosses (11) ein jeweiliges Energiemodul (19) ausgewählt und mit dem Antriebsmodul (15) sowie gegebenenfalls dem jeweiligen Kommunikationsmodul (17) verbunden werden kann.

## Claims

1. An electronic two-wheeler lock (11) comprising a latch element (21) which is movable between an open position and a closed position; a blocking mechanism (23) which blocks the latch element (21) in a latched state against departing from the closed position and releases it for a departure from the closed position in an unlatched state; an electric drive unit (25) which is configured to move the blocking mechanism (23) into the unlatched state; and a control unit (27) which is configured to control the drive unit (25),
wherein the two-wheeler lock (11) has a modular design and comprises a drive module (15) and a communication unit (17); and
wherein the drive module (15) comprises a module housing (31) in which at least the blocking mechanism (23), the drive unit (25) and the control unit (27) are received to be protected from mechanical effects from the outside and which delineates the drive module (15) with respect to the communication unit (17) and optionally with respect to further modules of the two-wheeler lock (11),
**characterized in that**
the electronic two-wheeler lock (11) furthermore comprises a lock housing (13) in which the drive module (15) and the communication unit (17) and optionally the further modules of the two-wheeler lock (11) are received, with the communication unit (17) being configured to receive control commands and to generate a respective control signal (33) in dependence on a respective received control command and to output it to the control unit (27) of the drive module (15) in encrypted form, and with the control unit (27) being configured to receive control signals (33) from the communication unit (17) in encrypted form and to control the drive unit (25) in response to the control signals (33).

2. A two-wheeler lock in accordance with claim 1,
wherein the communication unit (17) has an interface (37) to receive control commands, in particular by radio, from an external user device and/or from a vehicle system of the two-wheeler and preferably has an interface (37) to output status reports, in particular by radio, to an external user device and/or to a vehicle system of the two-wheeler.

3. A two-wheeler lock in accordance with at least one of the preceding claims, wherein the two-wheeler lock (11) comprises a lock housing (13) in which at least the communication unit (17) is received, with an actuation element, preferably a preloaded actuation element, in particular having a permanent magnet, being movably supported at an outer side of the lock housing (13) remote from the communication unit (17), said actuation element being configured to magnetically address the communication unit (17) in dependence on its respective position through the lock housing (13) to output a control signal (33) to the control unit (27).

4. A two-wheeler lock in accordance with at least one of the preceding claims, wherein the electric drive unit (25) is additionally configured to move the blocking mechanism (23) into the latched state.

5. A two-wheeler lock in accordance with at least one of the preceding claims, wherein the electric drive unit (25) is additionally configured to move the latch element (21) into the open position and/or into the closed position.

6. A two-wheeler lock in accordance with at least one of the preceding claims, wherein the latch element (21) is at least partly received in the module housing (31) of the drive module (15).

7. A two-wheeler lock in accordance with at least one of the preceding claims, wherein the drive module (15) further comprises at least one sensor (29) which is configured to detect a position of the latch element (21), a state of the blocking mechanism (23) and/or a state of the drive unit (25) and to output it/them to the control unit (27).

8. A two-wheeler lock in accordance with at least one of the preceding claims, wherein the control unit (27) is configured to output a status signal (35) to the communication unit (17), in particular in encrypted form.

9. A two-wheeler lock in accordance with at least one of the preceding claims, wherein the electronic two-wheeler lock (11) further comprises an energy module (19) which is configured to supply the drive module (15) and optionally the communication unit (17) with energy.

10. A two-wheeler lock in accordance with claim 9,
wherein the energy module (19) comprises an energy storage device and/or an interface via which it is supplied with energy from an external energy source, from an external energy store or from a vehicle system of the two-wheeler.

11. A two-wheeler lock in accordance with at least one of the preceding claims, wherein the two-wheeler lock (11) has a structure which can be pulled out of and can be pushed back into the remaining two-wheeler lock (11), in particular out of and into a lock housing (13) of the two-wheeler lock (11), in the manner of a drawer, with the communication unit (17), in particular a communication circuit board of the communication unit, and/or optionally the energy module (19), in particular the energy storage device of the energy module (19), being received in this structure or being supported at this structure to be accessible for a replacement.

12. A modular system for forming a two-wheeler lock (11) in accordance with at least one of the preceding claims,
wherein the system comprises a drive module (15) having a module housing (31) in which at least one blocking mechanism (23) is received that blocks a latch element (21) of a two-wheeler lock against departing from a closed position in a latched state and releases the latch element (21) for a departure from the closed position into an open position in an unlatched state, in which an electric drive unit (25) is received that is configured to set the blocking mechanism (23) into the unlatched state, and in which a control unit (27) is received that is configured to control the drive unit (25);
and wherein the system comprises a plurality of different kinds of communication modules (17) which are configured to generate control signals (33) and to output them to the control unit (27) of the drive module (15) in encrypted form and of which a respective communication module (17) can be selected and connected to the drive module (15) to form the two-wheeler lock (11).

13. A modular system in accordance with claim 12,
wherein the system furthermore comprises a plurality of different kinds of energy modules (19) which are configured to supply the drive module (15) and optionally the respective communication module (17) with energy and of which a respective energy module (19) can be selected and connected to the drive module (15) and optionally to the respective communication module (17) to form the two-wheeler lock (11).

## Revendications

1. Serrure électronique (11) pour deux-roues, comprenant un élément de verrouillage (21) qui est mobile entre une position ouverte et une position fermée, un mécanisme de blocage (23) qui bloque l'élément de verrouillage (21) dans un état verrouillé afin de l'interdire de quitter la position fermée, et le libère dans un état déverrouillé afin de lui permettre de quitter la position fermée, une unité d'entraînement électrique (25) qui est réalisée pour mettre le mécanisme de blocage (23) dans l'état déverrouillé, et une unité de commande (27) qui est réalisée pour piloter l'unité d'entraînement (25), dans laquelle
la serrure (11) pour deux-roues est de conception modulaire et comprend un module d'entraînement (15) et une unité de communication (17),
le module d'entraînement (15) comprend un boîtier de module (31) dans lequel sont logés au moins le mécanisme de blocage (23), l'unité d'entraînement (25) et l'unité de commande (27) afin d'être protégés contre les effets mécaniques provenant de l'extérieur, et qui délimite le module d'entraînement (15) vis-à-vis de l'unité de communication (17) et le cas échant vis-à-vis d'autres modules de la serrure (11) pour deux-roues,
**caractérisée en ce que**
la serrure électronique (11) pour deux-roues comprend en outre un boîtier de serrure (13) dans lequel sont logés le module d'entraînement (15) et l'unité de communication (17) et, le cas échéant, les autres modules de la serrure (11) pour deux-roues,
l'unité de communication (17) étant réalisée pour recevoir des ordres de commande et, en fonction d'un ordre de commande respectif reçu, pour générer un signal de commande respectif (33) et le délivrer sous forme cryptée à l'unité de commande (27) du module d'entraînement (15), et l'unité de commande (27) étant réalisée pour recevoir des signaux de commande (33) de l'unité de communication (17) sous forme cryptée et pour entraîner l'unité d'entraînement (25) en réponse aux signaux de commande (33).

2. Serrure pour deux-roues selon la revendication 1,
dans laquelle
l'unité de communication (17) comprend une interface (37) pour recevoir des ordres de commande, en particulier par radio, d'un dispositif utilisateur externe et/ou d'un système de véhicule du deux-roues, et elle comprend de préférence une interface (37) pour envoyer des messages d'état, en particulier par radio, à un dispositif utilisateur externe et/ou à un système de véhicule du deux-roues.

3. Serrure pour deux-roues selon l'une au moins des revendications précédentes,
dans laquelle
la serrure (11) pour deux-roues comporte un boîtier de serrure (13) dans lequel est logée au moins l'unité de communication (17),
un élément d'actionnement, de préférence précontraint, est monté de manière mobile sur un côté extérieur du boîtier de serrure (13) détourné de l'unité de communication (17), en particulier avec un aimant permanent, qui est conçu pour piloter par voie magnétique l'unité de communication (17) en fonction de sa position respective à travers le boîtier de serrure (13) afin de délivrer un signal de commande (33) à l'unité de commande (27).

4. Serrure pour deux-roues selon l'une au moins des revendications précédentes,
dans laquelle
l'unité d'entraînement électrique (25) est en outre réalisée pour mettre le mécanisme de blocage (23) dans l'état verrouillé.

5. Serrure pour deux-roues selon l'une au moins des revendications précédentes,
dans laquelle
l'unité d'entraînement électrique (25) est en outre réalisée pour déplacer l'élément de verrouillage (21) vers la position ouverte et/ou vers la position fermée.

6. Serrure pour deux-roues selon l'une au moins des revendications précédentes,
dans laquelle
l'élément de verrouillage (21) est logé au moins partiellement dans le boîtier de module (31) du module d'entraînement (15).

7. Serrure pour deux-roues selon l'une au moins des revendications précédentes,
dans laquelle
le module d'entraînement (15) comprend en outre au moins un capteur (29) qui est réalisé pour détecter une position de l'élément de verrouillage (21), un état du mécanisme de blocage (23) et/ou un état de l'unité d'entraînement (25) et pour la/le délivrer à l'unité de commande (27).

8. Serrure pour deux-roues selon l'une au moins des revendications précédentes,
dans laquelle
l'unité de commande (27) est réalisée pour délivrer un signal d'état (35), en particulier sous forme cryptée, à l'unité de communication (17).

9. Serrure pour deux-roues selon l'une au moins des revendications précédentes,
dans laquelle
la serrure électronique (11) pour deux-roues comprend en outre un module d'alimentation (19) qui est réalisé pour alimenter en énergie le module d'entraînement (15) et, le cas échéant, l'unité de communication (17).

10. Serrure pour deux-roues selon la revendication 9,
dans laquelle
le module d'alimentation (19) comprend un dispositif de stockage d'énergie et/ou une interface permettant de l'alimenter en énergie à partir d'une source d'énergie externe, d'un accumulateur d'énergie externe ou d'un système de véhicule du deux-roues.

11. Serrure pour deux-roues selon l'une au moins des revendications précédentes,
dans laquelle
la serrure (11) pour deux-roues présente une structure qui peut être retirée et repoussée à la manière d'un tiroir vis-à-vis du reste de la serrure (11) pour deux-roues, en particulier vis-à-vis d'un boîtier de serrure (13) de la serrure (11) pour deux-roues, l'unité de communication (17), en particulier une platine de communication de l'unité de communication, et/ou le cas échéant le module d'alimentation (19), en particulier le dispositif de stockage d'énergie du module d'alimentation (19), étant logé(s) dans cette structure ou monté(s) sur cette structure afin d'être accessible(s) pour un remplacement.

12. Système modulaire pour réaliser une serrure (11) pour deux-roues selon l'une au moins des revendications précédentes,
dans lequel
le système comprend un module d'entraînement (15) avec un boîtier de module (31) dans lequel sont logés au moins un mécanisme de blocage (23) qui, dans un état verrouillé, bloque un élément de verrouillage (21) d'une serrure pour deux-roues pour l'interdire de quitter une position fermée, et qui, dans un état déverrouillé, libère l'élément de verrouillage (21) pour lui permettre de quitter la position fermée vers une position ouverte, une unité d'entraînement électrique (25) réalisée pour mettre le mécanisme de blocage (23) dans l'état déverrouillé, et une unité de commande (27) réalisée pour piloter l'unité d'entraînement (25),
et le système comprend plusieurs modules de communication (17) de différents types réalisés pour générer des signaux de commande (33) et pour les délivrer sous forme cryptée à l'unité de commande (27) du module d'entraînement (15), et dont un module de communication respectif (17) peut être sélectionné et être connecté au module d'entraînement (15), afin de réaliser la serrure (11) pour deux-roues.

13. Système modulaire selon la revendication 12,
dans lequel
le système comprend en outre plusieurs modules d'alimentation (19) de différents types réalisés pour alimenter en énergie le module d'entraînement (15) et, le cas échéant, le module de communication respectif (17), et dont un module d'alimentation respectif (19) peut être sélectionné et être connecté au module d'entraînement (15) et le cas échéant au module de communication respectif (17), afin de réaliser la serrure (11) pour deux-roues.
